# EUROPEAN PATENT APPLICATION

(11) **EP 1 256 729 A2**
(43) Date of publication of application: **13.11.2002**
(21) Application number: 02010044.2
(22) Date of filing: 06.05.2002
(51) Int. Cl.: F16B 2/08

(54) **Clip fastening device**

(30) Priority: 07.05.2001 IT PD20010106
(71) Applicant: Vassilli s.r.l., 35020 Saonara (Padova) (IT)
(72) Inventor: Vassilli, Berto, 35020 Saonara PD (IT)

(57) **Abstract**

It is a collar-type strap clamping device, consisting of a metal strap (2), of a stand shaped stock (1, 5) provided on legs with opposed slits (8) and on the top with a threaded hole (7) with a penetration screw (3).

A feature of this patent is the strap (2) reduction mode, carried out by the penetration screw (3), around the element on which the strap (2) appears to be coiled up.

## Description

The invention concerns a new conception clip fastening device or strap clamping device.

The strap hose clamping devices, of classic type, are well-known; they are used for the junction of flexible pipes to rigid pipes, or to secure various objects (baskets, tables, etc.) to supports such as tubular uprights, or to support cables or pipings to pilings for the distribution of electric energy, of lighting and so on.

In most cases, these straps are used with functions which are merely restricted to pipe clamping.

The diversification of the various types of clamps assimilable to those so-called pipe clamps, is rather numerous and varied.

In all of them, however, the tightening effect of the straps on the object on which they are applied, is obtained by holding one end fast and, basing on said end, the other end is called back, with the aim that the original dimension of the hole portion, that is, of the internal area included within it , becomes smaller and smaller.

On all types of the so-called pipe clamps the pull of a mobile end towards a fixed end is effected during the tightening phase.

In the strap clamping device of this patent, the function is not restricted to the specific activity of the strap, because the tightening functionality of the strap is carried out jointly and dependently with the device of which it is an integral part.
It is a collar type strap, consisting of a metal strap, of a stand shaped stock, equipped with opposed splits on legs, and on top with a threaded hole with a penetration screw.

Once the stand shaped stock is placed by the legs on the element to be clamped, after having surrounded said element to be clamped by the strap, both ends of the metal strap are let through both stand splits.

Let penetrate the screw, which acts on the strap, which appears to be double in the length between the two splits, as a consequence of the two ends which are placed one upon the other.

After the first initial imprint owing to the screw end which is penetrating, the bending of this length of double strap, lowering inside the stand hollow, calls strap portions back to outside, so involving the clamping of the element surrounded by the strap.

Having suitably shaped the stand stock, so as to have extensions or to be previously assembled to mobile elements sliding inside it, some particular uses can be exploited.

The strap clamping device, new in its kind , exploits a principle never used in the specific application field, featuring cost reducing and simpler application modalities, by excluding any particular protrusion for safety purposes.

As an example, two different achievements of strap clamping device are considered, whose stand stock is configurated in the upper part with a projecting extension, spaced out from the surface of the support underneath - where it is fitted to - and a second type of strap clamping device housing inside it a pre-assembled rod, provided with a slit, which can slide and therefore can let an end out or in, with a function of extension spaced out from the support surface underneath where it is fitted to.

What stated above is better clarified by the drawing tables herewith attached.

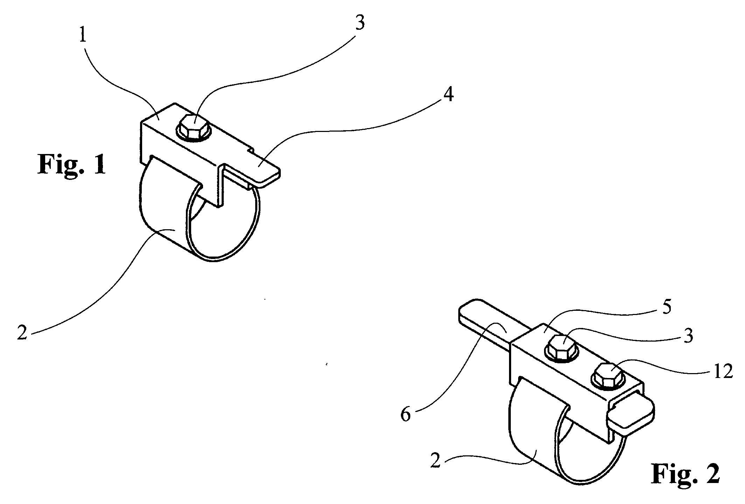

Fig. 1 shows the strap clamping device viewed axonometrically from outside, where it can be noticed the stand stock 1 with extension 4, the introduced strap 2 and the penetration screw 3.

Fig. 2 shows the strap clamping device, viewed axonometrically from outside , where it can be noticed the stand shaped stock 5 with mobile extension 6, the introduced strap 2, the penetration screw 3 and the drive screw 12 of the sliding rod 10.

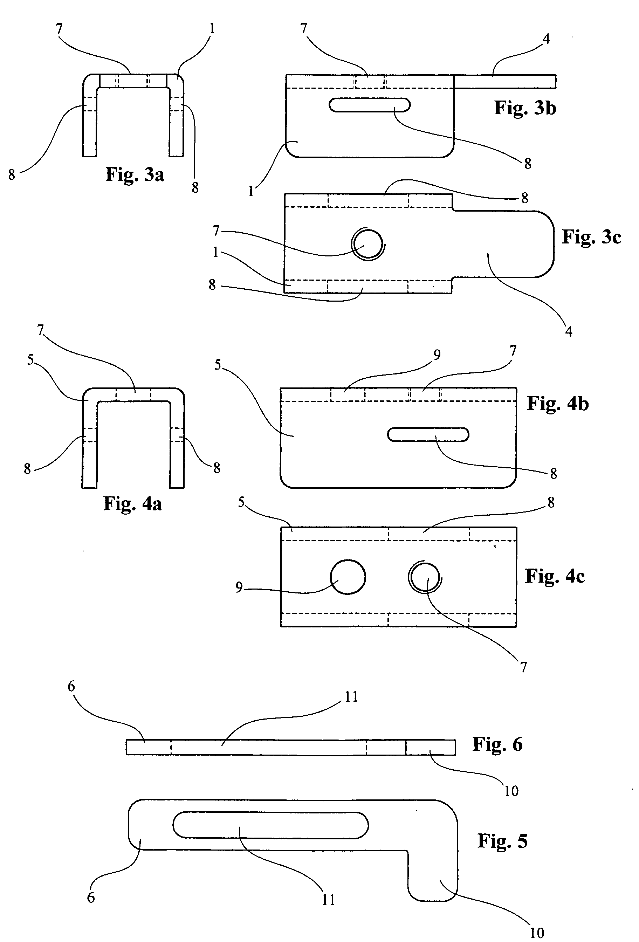

Fig. 3a, 3b and 3c show the stock 1 stand shaped viewed from front side, from side and from above.

It can be noticed the extension 4, the lateral slits 8 and the threaded hole on top 7.

Fig. 4a, 4b and 4c show the stand stock 5 viewed from front side, from side and from above.

It can be noticed the lateral slits 8 and the threaded holes on top 7 and 9, concerning penetration screw 3 and drive screw 12.

Fig. 5 and 6 show the rod 10 sliding inside the stock 5, stand shaped, plan view and section view. It can be noticed the extension 6 and the slit 11, which is in connection with penetration screw 3 and drive screw 12.

Fig. 7 shows the strap clamping device 5 equipped with sliding rod 10, sectioned at the area concerned by the slits 8, engaged on a cylindrical element 13.

It can be noticed the clamp 2 that, after having surrounded the cylindrical element 13, goes with its ends across both slits 8 of the stock 5, stand shaped. In the area of the internal length between the two slits 8, strap 2 appears to be double.

It can be noticed the drive screw 12 of the sliding rod 10, provided with slit 11.

It can be noticed the penetration screw 3 which is not working on strap 2.

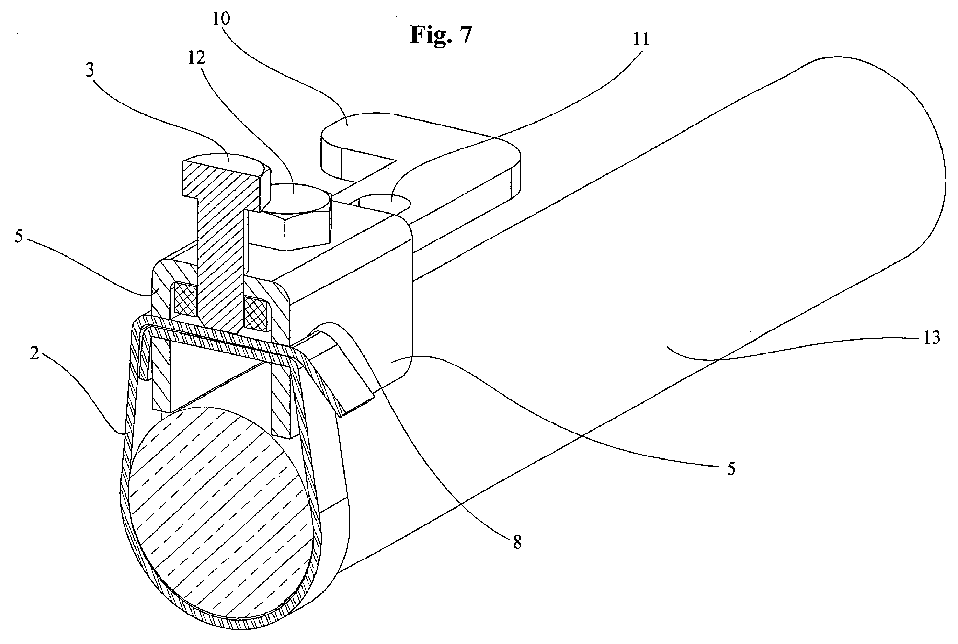

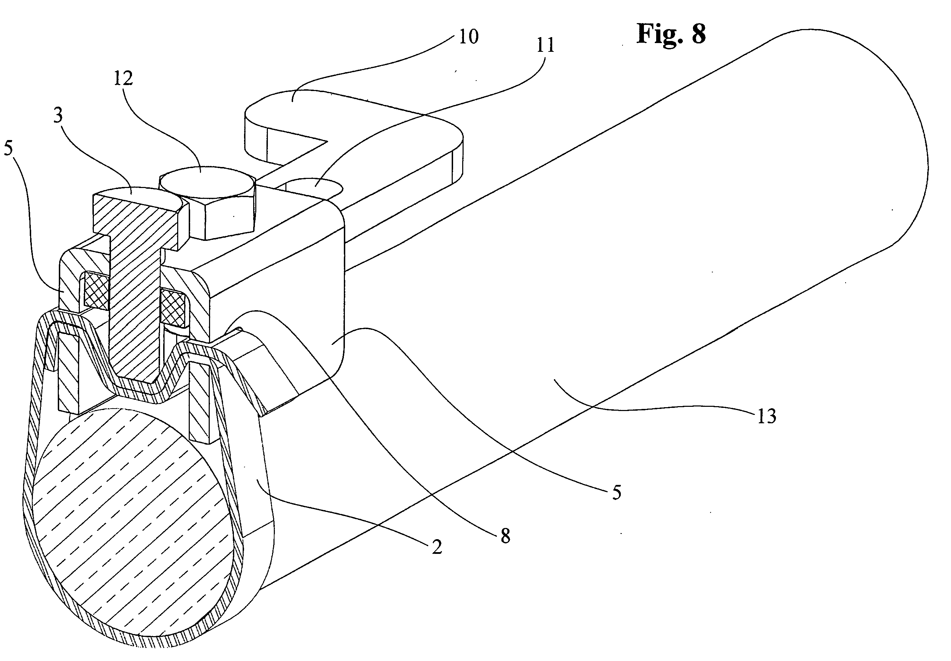

Fig. 8 corresponds to Fig. 7, where now the screw appears to have penetrated, so involving the bending downwards of the strap 2 in double layer. The inprint of the lower end of the screw 3 on the double layer of strap 2 does not allow sliding between the internal surfaces, kept adhering to each other.

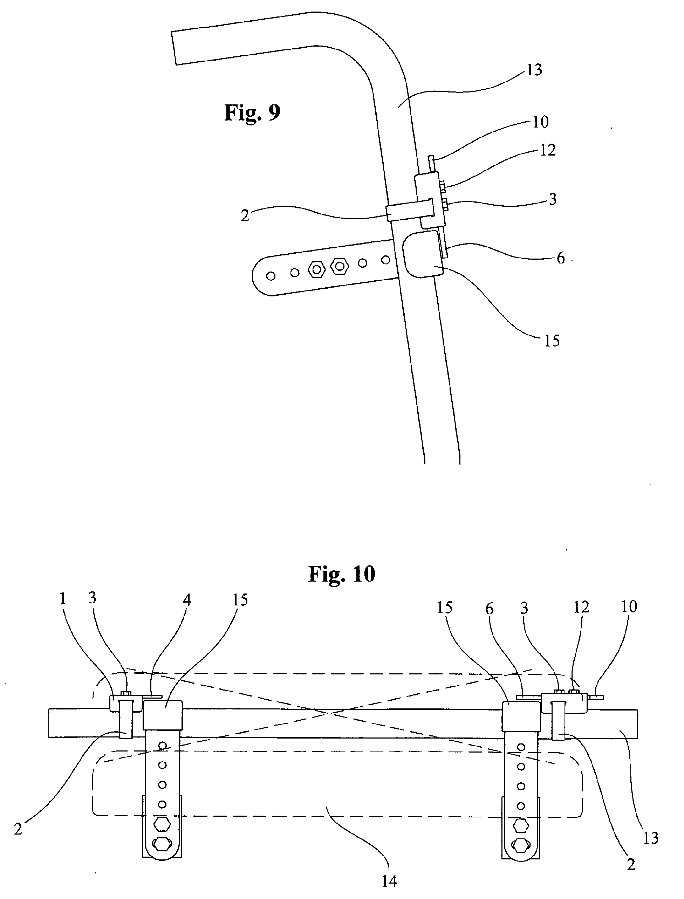

Fig. 9 schematically shows as an application example, the functionality of the strap clamping device 5 fitted on the tubular element 13, which holds the top of bracket 15 positioned with extension 6.

Fig. 10 shows schematically as an application example the functionality of the strap clamping device 1, 5 in the version with fixed extension 4 and in the version with mobile extension 6, which hold, positioned on structure 13, the top of brackets 15 integral with object 14, likely representing the seat of a seating frame.

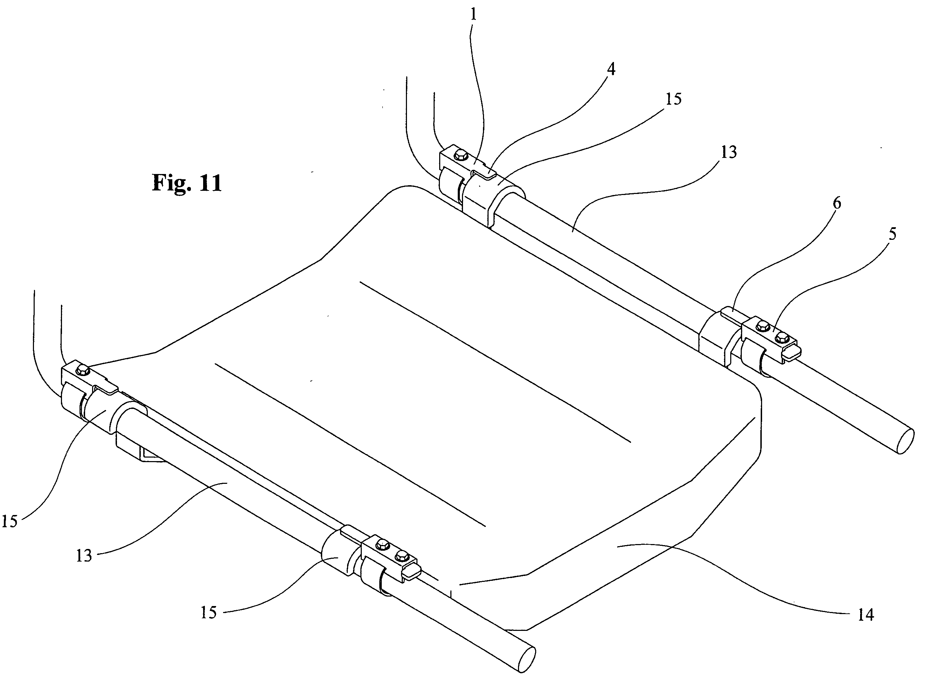

Fig. 11 shows schematically as an example, on an axonometric view, the seat of a seating frame, held back on the bearing structure 13 by means of a couple of strap clamping devices 1, 5 with their extensions 4 and 6 superimposed on top of brackets 15 integral with seat 14.

In consideration of the above, it appears the validity of the invention concerning the strap clamping device for the most varied requirements.

What described is meant only as an example and according to some preferential solutions.

Any other solution, even if improved, which an expert person in the field can achieve following the teachings of this patent, does not fall outside the patent.

## Claims

1. Strap clamping device featuring to be made up of a stock (1, 5) stand shaped, provided on legs with opposed splits (8) and on top of a threaded hole (7) with a penetration screw (3) and a strap (2) whose two ends are let through both splits (8), so as to appear completely superimposed in the internal length between the two splits of the stand stock.

2. Strap clamping device according to claim 1, featuring that the reduction of the length of the strap (2) situated in the external space of the slits (8) of the stock (1, 5) stand shaped, occurs by the extension of the strap (2) which takes place in the internal stroke between the two slits (8) of the stock, stand shaped (1, 5) owing to the bending produced by the pushing of the screw (3) penetrating inside.

3. Strap clamping device according to claim 1, featuring that if the stand shaped stock (1) is configurated in the upper part with an extension (4) projecting , spaced out from the surfaces underneath of support (13) to which it is applied, you obtain the availability of an extension (4) under which some elements to be hold back can be introduced.

4. Strap clamping device according to first claim, featuring that if the stand stock (5) is configurated in such a way to house inside it a pre-assembled rod (10) provided with slit (11) capable of sliding when the penetration screw (3) is lowered down, and therefore to let an end out or in, with the function of extension (6) spaced out from the surfaces underneath of the support (13) where it is positioned, you obtain the availability of an extension (6) under which some element to be hold back can be introduced.

5. Strap clamping device according to claims 3 and 4 featuring that, with the availability of fixed extensions (4) and mobile extensions (6) connected with the stocks (1, 5), stand shaped, fixed on a support, properly spaced from each other and placed in opposed position, you can hold back objects (14) introduced under above-mentioned extensions (4, 6).
